# EUROPEAN PATENT APPLICATION

(11) **EP 4 671 923 A1**
(43) Date of publication of application: **31.12.2025**
(21) Application number: 25178308.0
(22) Date of filing: 22.05.2025
(51) Int. Cl.: G06F 1/26, G06F 1/3206

(54) **MONOLITHIC SERIES CIRCUIT CONNECTIONS WITH HIGH-VOLTAGE INPUT**

(30) Priority: 26.06.2024 US 202418754421
(71) Applicant: INTEL Corporation, Santa Clara, CA 95054 (US)
(72) Inventor: BURTON, Edward, Hillsboro OR, 97124 (US); FETZER, Eric, Loveland CO, 80537 (US); MOREIN, Stephen, San Jose, CA, 95148 (US); RAVICHANDRAN, Krishnan, Saratoga, CA, 95070 (US); THOMAS, Thomas, Portland, OR, 97229 (US)
(74) Representative: HGF

(57) **Abstract**

A processing circuit includes a plurality of circuit blocks connected in series to a high-voltage supply and a voltage equalizer. The plurality of circuit blocks includes a corresponding plurality of voltage supply terminals and a corresponding plurality of ground terminals. Each circuit block of the plurality of circuit blocks includes a voltage supply terminal of the plurality of voltage supply terminals and a ground terminal of the plurality of ground terminals. At least two of the plurality of circuit blocks are serially coupled to each other. The voltage equalizer includes a plurality of equalizer terminals. An equalizer terminal of the plurality of equalizer terminals is coupled to a corresponding voltage supply terminal of the plurality of voltage supply terminals. The voltage supply terminal of at least one circuit block of the plurality of circuit blocks is coupled to a high-voltage source.

## Description

### BACKGROUND

Data center power efficiency (e.g., as based on Compute-per-Watt measurements) is a growing part of system architecture expansion criteria. Even though data center providers spend significant cost and area on power conversion, more than 25% of wall power to CPU circuits is wasted as heat. Additionally, gains from new process technologies and incremental innovations are lost due to power delivery losses in multiple voltage regulator stages and resistor path (I²R) losses, which increase with lower voltages used to save circuit power and higher currents needed for higher power integrated circuits. Therefore, improvement in power delivery techniques is an essential aspect in the further development of efficient computing architectures.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings listed below.
FIG. 1A is a block diagram of a data center apparatus including processing cores connected in parallel, in accordance with some embodiments.
FIG. 1B is a block diagram of a blockchain apparatus including processing cores connected in series, in accordance with some embodiments.
FIG. 2 is a block diagram of an apparatus including serially connected processing cores and a voltage equalizer configured on a monolithic die, in accordance with some embodiments.
FIG. 3A and FIG. 3B illustrate block diagrams associated with the operation of a switch capacitor voltage equalizer, in accordance with some embodiments.
FIG. 4 illustrates a graph of workload efficiency distribution associated with the apparatus of FIG. 2, in accordance with some embodiments.
FIG. 5 is a block diagram illustrating a comparison of the graph of workload efficiency distribution associated with the apparatus of FIG. 2 in comparison to prior art solutions using parallel power distribution, in accordance with some embodiments.
FIG. 6 is a flow diagram of an example method for powering a plurality of circuit blocks on a monolithic die, in accordance with some embodiments.
FIG. 7 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

As used herein, the term "IO" indicates input/output. As used herein, the term "R-C" indicates resistance and capacitance. As used herein, the term "Rx" indicates receiver (or receive). As used herein, the term "Tx" indicates transmitter (or transmit). As used herein, the term "TRX" indicates transceiver. As used herein, the term "UCIe" indicates Universal Chiplet Interconnect Express. As used herein, the term "Vref" indicates reference voltage. As used herein, the term "Vin" indicates input voltage. As used herein, the terms "serially coupled," "serially connected," and "connected in series" are synonymous to each other and indicate a serial connection between two or more components/circuits where the serial connection can be based on a direct or indirect electrical connection between the two or more components/circuits. As used herein, the terms "parallel coupled," "parallel connected," and "connected in parallel" are synonymous to each other and indicate a parallel connection between two or more components/circuits where the parallel connection can be based on a direct or indirect electrical connection between the two or more components/circuits.

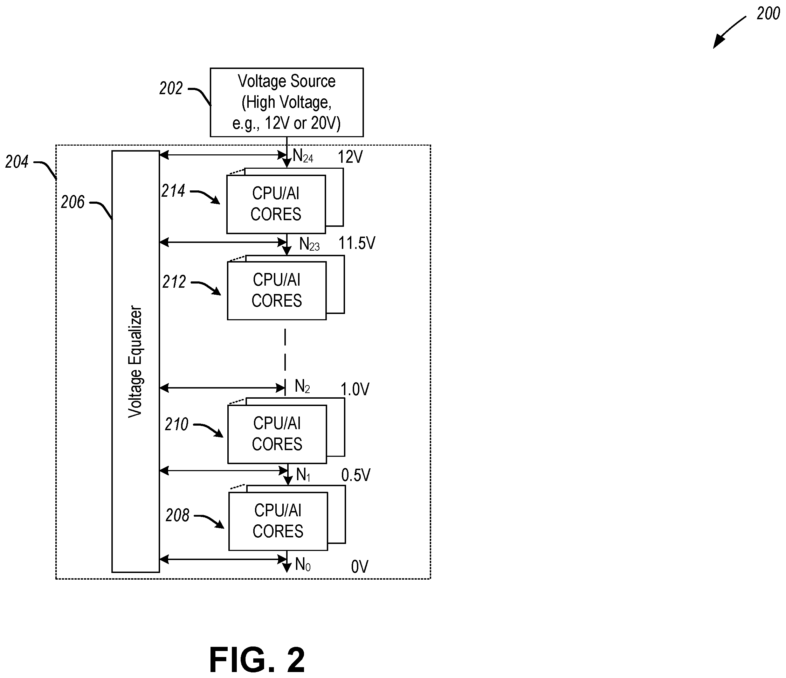

The disclosed techniques (e.g., the power delivery configuration of FIG. 2) can be based on using series power delivered to a monolithic die (with a voltage equalizer and serially-coupled cores) without multiple conversion stages, which can reduce the power delivery losses from greater than 25% to below 5%. The power saving can be used for a 30% boost in core count, or it will improve TCO by 7%.

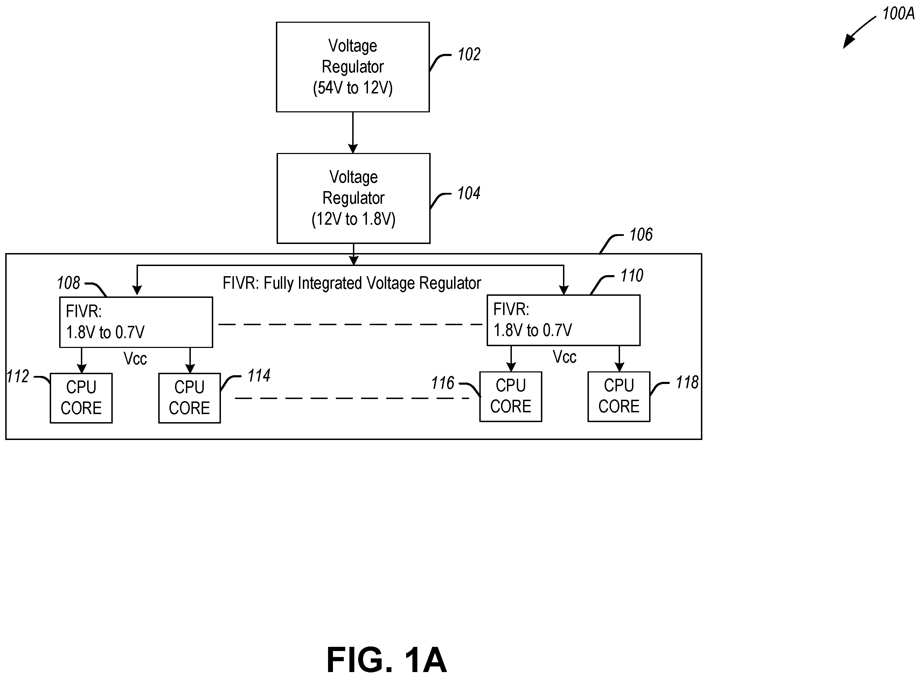

FIG. 1A is a block diagram of a data center apparatus 100A including processing cores connected in parallel, in accordance with some embodiments. Referring to FIG. 1A, the data center apparatus 100A includes a voltage regulator 102 (which can be used to downconvert voltage from 54V to 12V), a voltage regulator 104 (which can be used to downconvert voltage from 12V to 1.8V), and a die 106.

The die 106 includes fully integrated voltage regulators (FIVRs) 108, ..., 110 configured to downconvert voltage from, e.g., 1.8V to 0.7V, and supply the downconverted voltage to a plurality of cores 112, 114, ..., 116, and 118 that are coupled in parallel to each other.

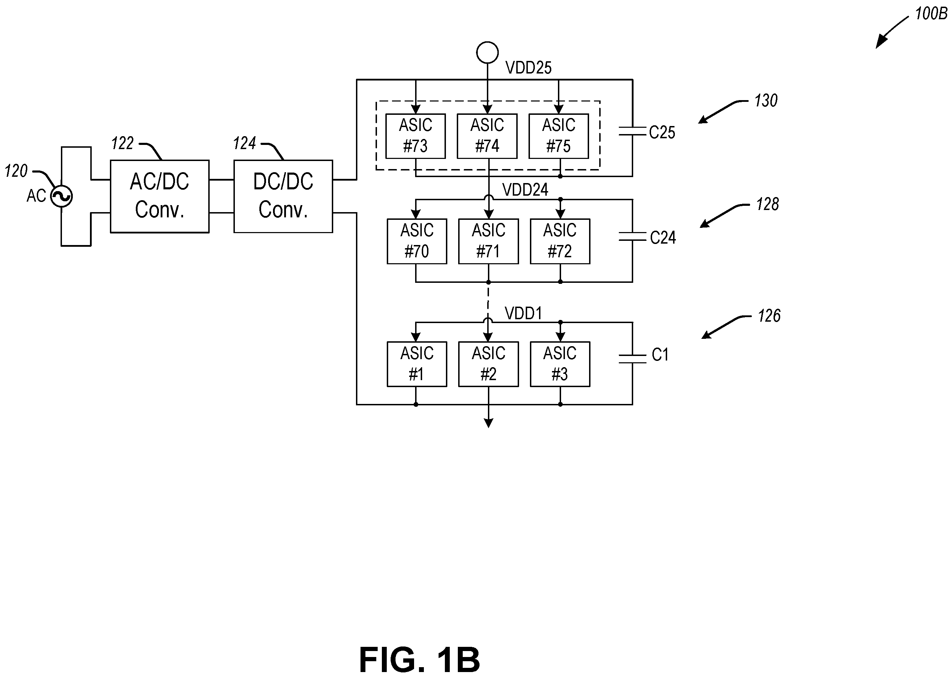

FIG. 1B is a block diagram of a blockchain apparatus 100B including processing cores connected in series, in accordance with some embodiments. Referring to FIG. 1B, the blockchain apparatus 100B includes an AC source 120, an AC-to-DC converter 122, a DC-to-DC converter 124, and serially coupled application-specific integrated circuit (ASIC) banks 126, ..., 128, and 130.

The configuration used by the apparatus of FIG. 1A is based on all cores being connected in parallel to a supply voltage (Vcc). Multiple Voltage Regulator (VR) stages convert 54V at a lower current to Vcc at a high current for the CPU circuits. Although this approach minimizes losses and allows each core to have variable currents, the end-to-end efficiency is reduced to only about 71%. Vcc is reduced by CMOS scaling to reduce dynamic power (Cdyn * Vcc² * frequency) as both Cdyn and core count increase for performance. Vcc can reach the magnitude of hundreds of mV for future low-power semiconductor devices. While these enable significant circuit power saving (with Vcc²), a larger part of the input power is lost as heat while converting 54V input to hundreds of mV Vcc at high current.

The configuration used by the apparatus of FIG. 1B is not based on supplying high voltage to a monolithic die that includes a voltage equalizer coupled to a plurality of serially coupled cores.

In comparison to FIG. 1A and FIG. 1B, the apparatus of FIG. 2 is based on series power connecting multiple cores in a series stack to a higher voltage and lower current, minimizing power conversion losses.

As shown in FIG. 2, the same type of circuit blocks (such as CPU/GPU/AI cores or interconnect) are connected in series to a system available high voltage, eliminating multiple voltage regulator stages. Although the currents through each of the circuit blocks (CPU/AI cores in this example) will be nominally the same, the currents continuously vary based on the workloads and states. A voltage equalizer (which can be built using switch capacitors) dynamically adjusts individual supply voltages with varying core currents. Level shifters can be used to communicate across different core rows with different voltages.

FIG. 2 is a block diagram of apparatus 200, including serially connected processing cores and a voltage equalizer configured on a monolithic die, in accordance with some embodiments. Referring to FIG. 2, apparatus 200 includes a voltage source 202 and a monolithic die 204. The voltage source 202 can be a high voltage source generating supply voltage (e.g., 12V or 20V) for the monolithic die 204.

The monolithic die 204 includes a voltage equalizer 206 and a plurality of circuit blocks 208, 210, ..., 212, and 214 that are connected in series to each other. The voltage equalizer 206 is configured to divide the supply voltage provided by the voltage source 202 equally across the serially coupled plurality of circuit blocks 208, ..., 214. More specifically, voltage equalizer 206 is configured to supply corresponding voltages at nodes N0, ..., N24 so that the voltage between a voltage supply terminal and a ground terminal of each circuit block remains the same. In the particular example illustrated in FIG. 2, a supply voltage of 12V is equalized among 24 circuit blocks (e.g., the plurality of circuit blocks 208, ..., 214 includes 24 serially coupled circuit blocks) so that the voltage between a voltage supply terminal and a ground terminal of each circuit block remains at 0.5V.

In some aspects, each circuit block of the plurality of circuit blocks 208, ..., 214 includes a plurality of processing cores coupled in parallel to each other. In some aspects, one or more level shifters can be used for communication across rows of the parallel-coupled cores of each circuit block.

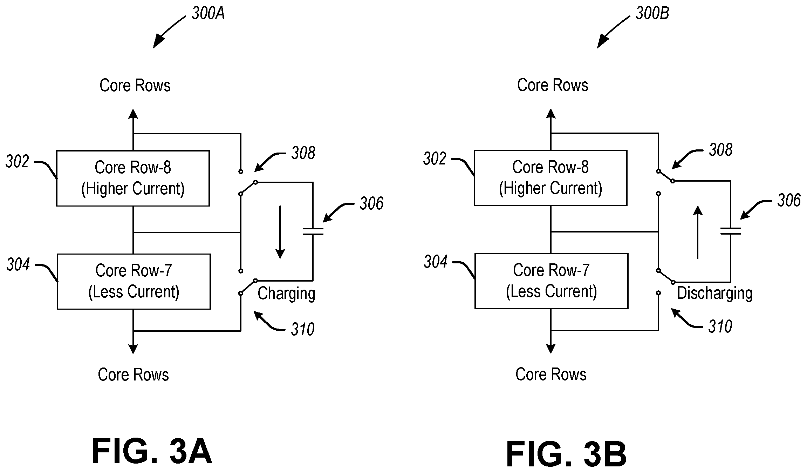

In some aspects, the voltage equalizer 206 is a switch capacitor voltage equalizer (e.g., as discussed in connection with FIG. 3A and FIG. 3B).

In some aspects, voltage equalizer 206 is configured to monitor current usage by cores in each circuit block and dynamically adjust the supplied voltage to the circuit block to maintain the equal voltage distribution among the plurality of circuit blocks 208, ..., 214 on the monolithic die 204.

In some aspects, the ground terminals for the plurality of circuit blocks 208, ..., 214 are isolated (e.g., electrically isolated) from each other.

Datacenter CPU/GPU cores operate with different workloads and frequencies. FIG. 2 illustrates an apparatus based on connecting multiple rows of parallel cores in a series stack (N) with a voltage equalizer to transfer any unbalanced current across the core rows in each circuit block. By eliminating multiple VR stages while bringing in power at higher voltage and lower current to the monolithic die, the power delivery losses can be reduced to less than 5%. In some aspects, the monolithic core uses transistor voltage isolation to be connected in series, which can be configured based on substrate isolation (e.g., using Intel's PowerVia technology) along with ultra-dense metal-insulator-metal (MIM) capacitors. In this regard, the disclosed techniques can be used to enable series power to support high-power applications (e.g., kW range) with high voltage input at lower currents.

FIG. 3A and FIG. 3B illustrate corresponding block diagrams 300A and 300B associated with the operation of a switch capacitor voltage equalizer, in accordance with some embodiments. Referring to FIG. 3A and FIG. 3B, there is illustrated a capacitor 306, which can be part of the voltage equalizer 206. In some aspects, capacitor 306 is a MIM capacitor. In some aspects, capacitor 306 can be connected to core rows (e.g., core row 302 and core row 304) via switches 308 and 310 to perform charging and discharging as needed.

In some aspects, voltage equalizer 206 can be configured as a high-efficiency switch capacitor equalizer, which is a critical component to balance the currents for non-uniform workloads or core stalls in a generalized data center application. FIG. 3A and FIG. 3B show the simplified operation. Only core row-7 and row-8 are shown, with row-7 using less current than row-8. Switches 308 and 310 are continuously switching across row-7 and row-8 with opposite phases of a clock. When the high-value MIM capacitor (e.g., capacitor 306) is connected across row 7, it charges using the excess current. In the next phase, when the capacitor is connected across row 8, it discharges, providing the additional current that row 8 needs. In an actual implementation, the switches are large CMOS inverters driven by multiple clock phases, and the capacitors are distributed in rows and columns.

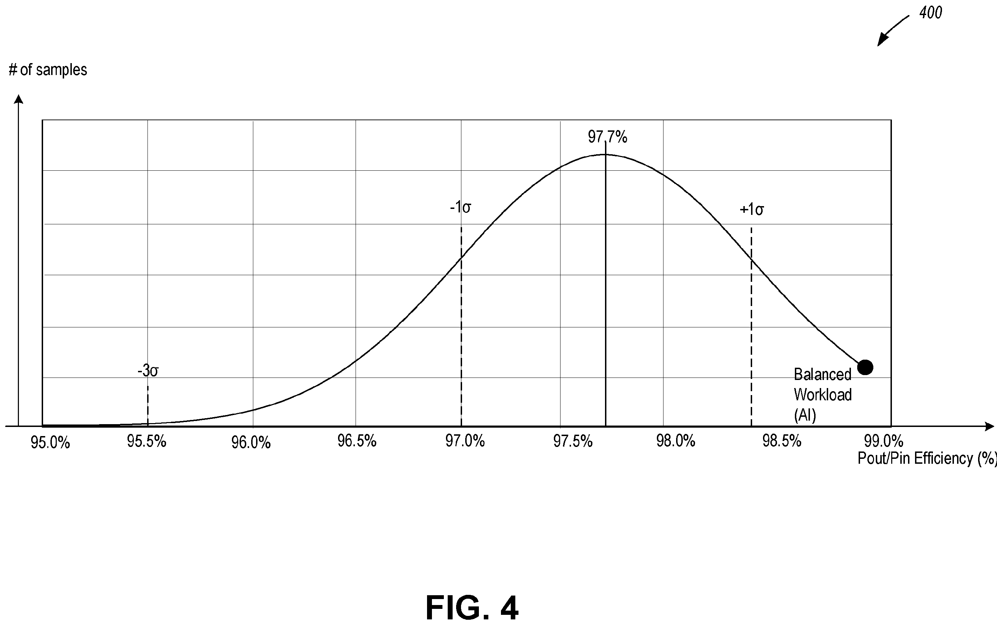

FIG. 4 illustrates a graph 400 of workload efficiency distribution associated with the apparatus of FIG. 2, in accordance with some embodiments. FIG. 4 shows efficiency distribution with the equalizer for varying workloads. As illustrated in FIG. 4, for balanced workloads, the efficiency can be close to 99% with the equalizer idle. Even for reasonably unbalanced workloads, the efficiency is greater than 95%, whereas conventional power delivery will have a smaller than 75% efficiency.

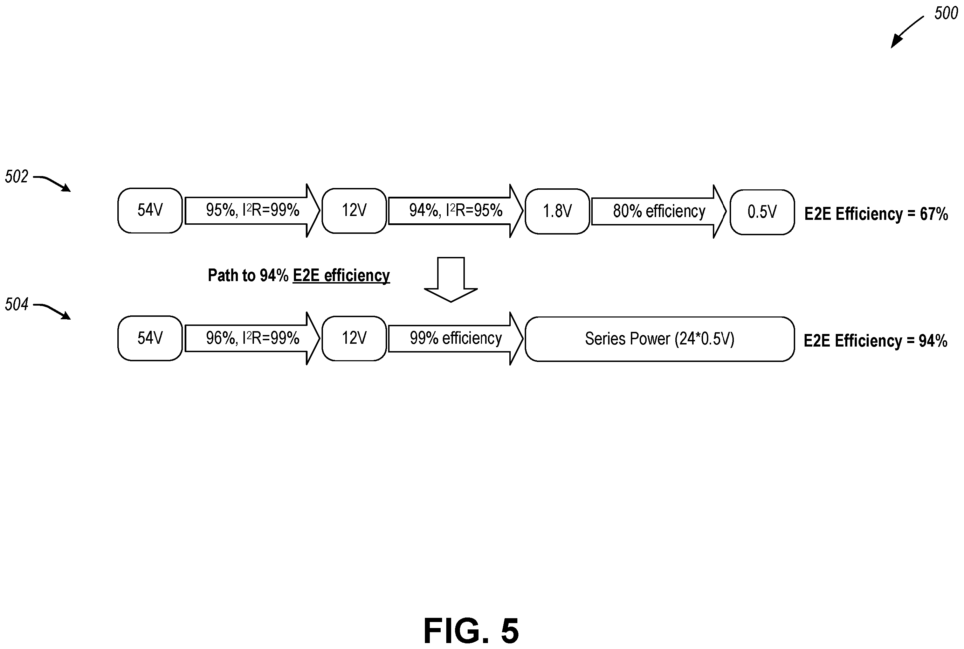

FIG. 5 is a block diagram 500 illustrating a comparison of the graph of workload efficiency distribution associated with the apparatus of FIG. 2 in comparison to prior art solutions using parallel power distribution, in accordance with some embodiments. Referring to FIG. 5, efficiency determination 502 is associated with prior art techniques that use multiple voltage conversion stages, resulting in an efficiency of approximately 67%. In comparison, efficiency determination 504 is associated with the disclosed techniques (e.g., the apparatus of FIG. 2), where high supply voltage is provided to a monolithic die that includes a voltage equalizer and a plurality of serially coupled circuit blocks, resulting in an increased end-to-end efficiency of approximately 94%. In this regard, the disclosed techniques based on series power bring high voltage at low current (compared to prior art techniques based on bringing low voltage at high current with multiple conversion stages). The improvement of efficiency is based at least on a substantial number of circuit blocks coupled in series on a monolithic die and powered by a high supply voltage equally distributed among the circuit blocks via a voltage equalizer.

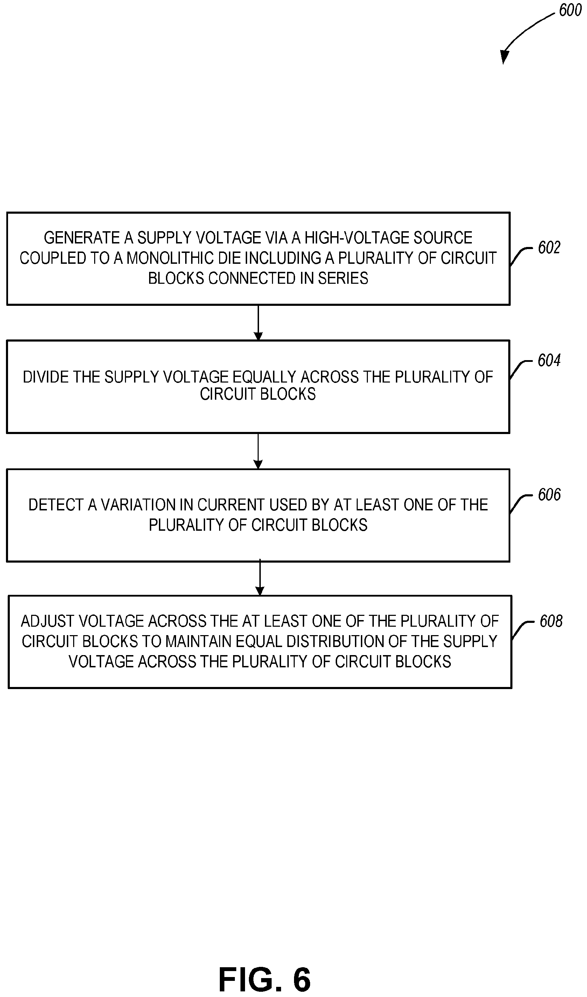

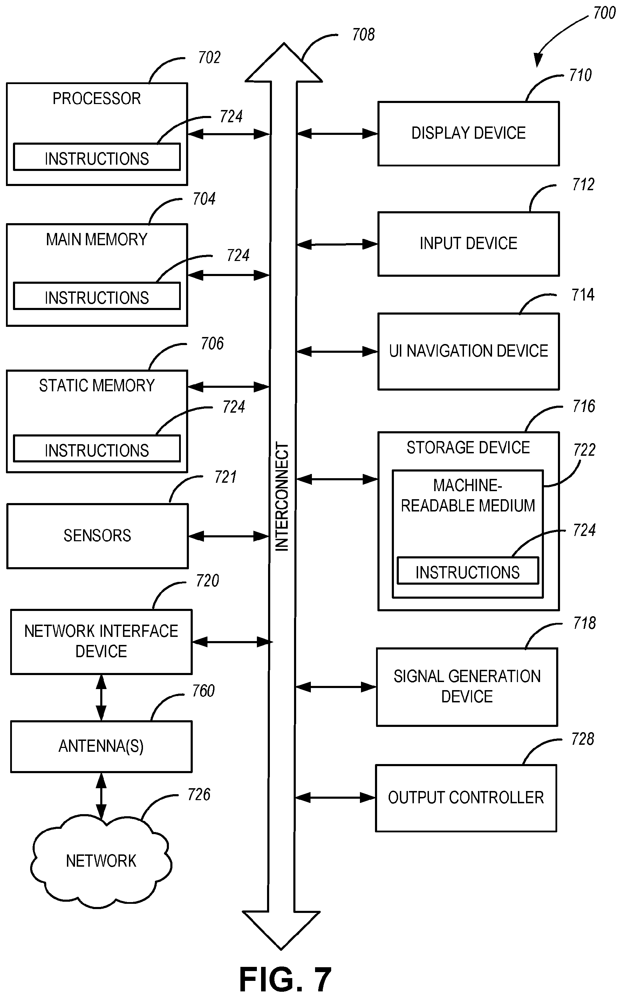

FIG. 6 is a flow diagram of an example method 600 for powering a plurality of circuit blocks on a monolithic die, in accordance with some embodiments. Referring to FIG. 6, method 600 includes operations 602, 604, 606, and 608, which may be executed by a processor, an embedded controller, a receiver circuit, a transceiver circuit, or another processor of a computing device (e.g., hardware processor 702 of machine 700 illustrated in FIG. 7, which can include one or more of the circuits discussed in connection with FIGS. 1A-5). In some embodiments, one or more of the circuits discussed in connection with FIGS. 1A-5 can perform the functionalities (or include the configurations or circuitry) associated with FIG. 6, as well as one or more of the examples listed below.

At operation 602, a supply voltage is generated via a high-voltage source (e.g., voltage source 202) coupled to a monolithic die that includes circuits connected in series (e.g., monolithic die 204).

At operation 604, the supply voltage is equally divided across a plurality of circuit blocks (e.g., voltage equalizer 206 divides the supply voltage equally among the plurality of circuit blocks 208, ..., 214). In some aspects, the series connection divides the supply voltage equally across the plurality of circuit blocks when the currents are identical (balanced) for each circuit block. When the currents are unbalanced, the supply voltage can be equally divided.

At operation 606, a variation in current used by at least one of the plurality of circuit blocks is detected (e.g., by the voltage equalizer 206).

At operation 608, the voltage equalizer 206 adjusts voltage across the at least one of the plurality of circuit blocks to maintain the equal distribution of the supply voltage across the plurality of circuit blocks.

FIG. 7 illustrates a block diagram of an example machine 700 upon which any one or more of the techniques (e.g., methodologies) discussed herein may perform. In alternative embodiments, the machine 700 may operate as a standalone device or may be connected (e.g., networked) to other machines. In a networked deployment, machine 700 may operate in the capacity of a server machine, a client machine, or both in server-client network environments. In an example, machine 700 may function as a peer machine in a peer-to-peer (P2P) (or other distributed) network environment. The machine 700 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 700 may include a hardware processor 702 (e.g., a central processing unit (CPU), a graphics processing unit (GPU), a hardware processor core, or any combination thereof), a main memory 704, and a static memory 706, some or all of which may communicate with each other via an interlink (e.g., bus) 708. In some aspects, the main memory 704, the static memory 706, or any other type of memory (including cache memory) used by machine 700 can be configured based on the disclosed techniques or can implement the disclosed memory devices.

Specific examples of main memory 704 include Random Access Memory (RAM) and semiconductor memory devices, which may include, in some embodiments, storage locations in semiconductors such as registers. Specific examples of static memory 706 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 700 may further include a display device 710, an input device 712 (e.g., a keyboard), and a user interface (UI) navigation device 714 (e.g., a mouse). In an example, the display device 710, the input device 712, and the UI navigation device 714 may be a touchscreen display. The machine 700 may additionally include a storage device (e.g., drive unit or another mass storage device) 716, a signal generation device 718 (e.g., a speaker), a network interface device 720, and one or more sensors 721, such as a global positioning system (GPS) sensor, compass, accelerometer, or other sensors. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 702 and/or instructions 724 may comprise processing circuitry and/or transceiver circuitry.

The storage device 716 may include a machine-readable medium 722 on which one or more sets of data structures or instructions 724 (e.g., software) embodying or utilized by any one or more of the techniques or functions described herein can be stored. Instructions 724 may also reside, completely or at least partially, within the main memory 704, within static memory 706, or the hardware processor 702 during execution thereof by machine 700. In an example, one or any combination of the hardware processor 702, the main memory 704, the static memory 706, or the storage device 716 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 722 is illustrated as a single medium, the term "machine-readable medium" may include a single medium or multiple media (e.g., a centralized or distributed database and/or associated caches and servers) configured to store instructions 724.

An apparatus of machine 700 may be one or more of a hardware processor 702 (e.g., a central processing unit (CPU), a graphics processing unit (GPU), a hardware processor core, or any combination thereof), a main memory 704 and a static memory 706, one or more sensors 721, a network interface device 720, one or more antennas 760, a display device 710, an input device 712, a UI navigation device 714, a storage device 716, instructions 724, a signal generation device 718, and an output controller 728. The apparatus may be configured to perform one or more of the methods and/or operations disclosed herein. The apparatus may be intended as a component of machine 700 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 700 and that causes machine 700 to perform any one or more of the techniques of the present disclosure, or that is capable of storing, encoding, or carrying data structures used by or associated with such instructions. Nonlimiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 724 may further be transmitted or received over a communications network 726 using a transmission medium via the network interface device 720 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.8.4 family of standards, a Long Term Evolution (LTE) family of standards, a Universal Mobile Telecommunications System (UMTS) family of standards, peer-to-peer (P2P) networks, among others.

In an example, the network interface device 720 may include one or more physical jacks (e.g., Ethernet, coaxial, or phone jacks) or one or more antennas to connect to the communications network 726. In an example, the network interface device 720 may include one or more antennas 760 to wirelessly communicate using at least one single-input multiple-output (SIMO), multiple-input multiple-output (MIMO), or multiple-input single-output (MISO) techniques. In some examples, the network interface device 720 may wirelessly communicate using multiple-user MIMO techniques. The term "transmission medium" shall be taken to include any intangible medium that can store, encode, or carry instructions for execution by machine 700 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is a processing circuit comprising a plurality of circuit blocks comprising a corresponding plurality of voltage supply terminals and a corresponding plurality of ground terminals, each circuit block of the plurality of circuit blocks comprising a voltage supply terminal of the plurality of voltage supply terminals and a ground terminal of the plurality of ground terminals, and the plurality of circuit blocks are serially coupled to each other; and a voltage equalizer comprising a plurality of equalizer terminals, an equalizer terminal of the plurality of equalizer terminals is coupled to a corresponding voltage supply terminal of the plurality of voltage supply terminals, and the voltage supply terminal of at least one circuit block of the plurality of circuit blocks is coupled to a high-voltage source.

In Example 2, the subject matter of Example 1 includes subject matter where the plurality of circuit blocks comprises a starting circuit block and an ending circuit block and wherein the starting circuit block is coupled to the high-voltage source.

In Example 3, the subject matter of Example 2 includes subject matter where the ground terminal of the ending circuit block of the plurality of circuit blocks is coupled to one of the plurality of equalizer terminals supplying zero volts.

In Example 4, the subject matter of Examples 2-3 includes subject matter where the voltage supply terminal of the starting circuit block is coupled to one of the plurality of equalizer terminals supplying a voltage signal equal to a supply voltage of the high-voltage source.

In Example 5, the subject matter of Example 4 includes subject matter where the ground terminal of the starting circuit block is coupled to the voltage terminal of a subsequent circuit block of the plurality of circuit blocks, the subsequent circuit block, and the starting circuit block being serially coupled to each other.

In Example 6, the subject matter of Examples 2-5 includes subject matter where the voltage terminal of the ending circuit block is coupled to the ground terminal of a preceding circuit block of the plurality of circuit blocks, the preceding circuit block, and the ending circuit block being serially coupled to each other.

In Example 7, the subject matter of Examples 1-6 includes subject matter where each circuit block of the plurality of circuit blocks comprises a plurality of processor cores coupled in parallel to each other.

In Example 8, the subject matter of Examples 1-7 includes subject matter where the processing circuit comprises a system-on-chip (SoC), the SoC comprising an integrated circuit (IC), the IC comprising at least two circuit blocks of the plurality of circuit blocks, and the voltage equalizer.

In Example 9, the subject matter of Example 8 includes subject matter where the SoC further comprises at least one connector and wherein the at least one connector conforms with at least one of Universal Serial Bus (USB), High-Definition Multimedia Interface (HDMI), Thunderbolt, Peripheral Component Interconnect Express (PCIe), and Ethernet specifications.

Example 10 is an apparatus comprising a high-voltage source configured to generate a supply voltage; a plurality of circuit blocks comprising a corresponding plurality of voltage supply terminals and a corresponding plurality of ground terminals, the plurality of circuit blocks being serially connected to each other; and a voltage equalizer configured to divide the supply voltage equally across the plurality of circuit blocks.

In Example 11, the subject matter of Example 10 includes a monolithic die, which includes the plurality of circuit blocks and the voltage equalizer. The monolithic die includes transistor voltage isolation, based on substrate isolation (e.g., using Intel's PowerVia technology). The monolithic die includes the plurality of circuit blocks connected in series to the high-voltage source and the voltage equalizer. As used herein, the term "high voltage" source (or supply) is defined as a voltage higher than the supply voltage (Vcc) of an individual circuit block.

In Example 12, the subject matter of Example 11 includes subject matter where each circuit block of the plurality of circuit blocks comprises a voltage supply terminal of the plurality of voltage supply terminals and a ground terminal of the plurality of ground terminals, and the plurality of circuit blocks comprises a starting circuit block and an ending circuit block.

In Example 13, the subject matter of Example 12 includes subject matter where the voltage supply terminal of the starting circuit block is coupled to a first equalizer terminal of a plurality of equalizer terminals of the voltage equalizer, the equalizer terminal supplying a voltage signal equal to the supply voltage of the high-voltage source.

In Example 14, the subject matter of Example 13 includes subject matter where the ground terminal of the ending circuit block of the plurality of circuit blocks is coupled to a second equalizer terminal of the plurality of equalizer terminals supplying zero volts.

In Example 15, the subject matter of Examples 10-14 includes subject matter where two or more of the plurality of ground terminals are electrically isolated from each other.

In Example 16, the subject matter of Examples 10-15 includes subject matter where the voltage equalizer is configured to detect a variation in current used by at least one of the plurality of circuit blocks and adjust voltage across the at least one of the plurality of circuit blocks to maintain equal distribution of the supply voltage across the plurality of circuit blocks.

In Example 17, the subject matter of Examples 10-16 includes subject matter where the voltage equalizer is a switch capacitor voltage equalizer.

In Example 18, the subject matter of Example 17 includes a system-on-chip (SoC), the SoC comprising an integrated circuit (IC), and the IC comprising at least two circuit blocks of the plurality of circuit blocks and the voltage equalizer.

In Example 19, the subject matter of Example 18 includes subject matter where each circuit block of the plurality of circuit blocks comprises a plurality of processor cores coupled in parallel to each other via at least one connector, the at least one connector conforms with at least one of Universal Serial Bus (USB), High-Definition Multimedia Interface (HDMI), Thunderbolt, Peripheral Component Interconnect Express (PCIe), and Ethernet specifications.

Example 20 is a method for powering a plurality of circuit blocks on a monolithic die, the method comprising generating a supply voltage via a high-voltage source coupled to the monolithic die, dividing the supply voltage equally across the plurality of circuit blocks, detecting a variation in current used by at least one of the plurality of circuit blocks; and adjusting voltage across the at least one of the plurality of circuit blocks to maintain equal distribution of the supply voltage across the plurality of circuit blocks.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. A processing circuit comprising:
a plurality of circuit blocks comprising a corresponding plurality of voltage supply terminals and a corresponding plurality of ground terminals, each circuit block of the plurality of circuit blocks comprising a voltage supply terminal of the plurality of voltage supply terminals and a ground terminal of the plurality of ground terminals, and the plurality of circuit blocks are serially coupled to each other; and
a voltage equalizer comprising a plurality of equalizer terminals, an equalizer terminal of the plurality of equalizer terminals is coupled to a corresponding voltage supply terminal of the plurality of voltage supply terminals, and
the voltage supply terminal of at least one circuit block of the plurality of circuit blocks is coupled to a high-voltage source.

2. The processing circuit of claim 1, wherein the plurality of circuit blocks comprises a starting circuit block and an ending circuit block, and wherein the starting circuit block is coupled to the high-voltage source.

3. The processing circuit of claim 2, wherein the ground terminal of the ending circuit block of the plurality of circuit blocks is coupled to one of the plurality of equalizer terminals supplying zero volts.

4. The processing circuit of claim 2, wherein the voltage supply terminal of the starting circuit block is coupled to one of the plurality of equalizer terminals supplying a voltage signal equal to a supply voltage of the high-voltage source.

5. The processing circuit of claim 4, wherein the ground terminal of the starting circuit block is coupled to the voltage terminal of a subsequent circuit block of the plurality of circuit blocks, the subsequent circuit block and the starting circuit block being serially coupled to each other.

6. The processing circuit of claim 2, wherein the voltage terminal of the ending circuit block is coupled to the ground terminal of a preceding circuit block of the plurality of circuit blocks, the preceding circuit block and the ending circuit block being serially coupled to each other.

7. The processing circuit of any of claims 1-6, wherein each circuit block of the plurality of circuit blocks comprises a plurality of processor cores coupled in parallel to each other.

8. The processing circuit of any of claims 1-7, wherein the processing circuit comprises a system-on-chip (SoC), the SoC comprising an integrated circuit (IC), the IC comprising at least two circuit blocks of the plurality of circuit blocks, and the voltage equalizer.

9. An apparatus comprising:
a high-voltage source configured to generate a supply voltage;
a plurality of circuit blocks comprising a corresponding plurality of voltage supply terminals and a corresponding plurality of ground terminals, the plurality of circuit blocks being serially connected to each other and connected in series to the high-voltage source; and
a voltage equalizer configured to divide the supply voltage equally across the plurality of circuit blocks.

10. The apparatus of claim 9, further comprising:
a monolithic die, the monolithic die including the plurality of circuit blocks and the voltage equalizer, and the monolithic including transistor voltage isolation based on substrate isolation.

11. The apparatus of claim 10, wherein:
each circuit block of the plurality of circuit blocks comprises a voltage supply terminal of the plurality of voltage supply terminals and a ground terminal of the plurality of ground terminals; and
the plurality of circuit blocks comprises a starting circuit block and an ending circuit block,
wherein the voltage supply terminal of the starting circuit block is coupled to a first equalizer terminal of a plurality of equalizer terminals of the voltage equalizer, the equalizer terminal supplying a voltage signal equal to the supply voltage of the high-voltage source, and wherein the ground terminal of the ending circuit block of the plurality of circuit blocks is coupled to a second equalizer terminal of the plurality of equalizer terminals supplying zero volts.

12. The apparatus of any of claims 9-11, wherein two or more of the plurality of ground terminals are electrically isolated from each other.

13. The apparatus of any of claims 9-12, wherein the voltage equalizer is configured to:
detect a variation in current used by at least one of the plurality of circuit blocks; and
adjust voltage across the at least one of the plurality of circuit blocks to maintain equal distribution of the supply voltage across the plurality of circuit blocks.

14. A method for powering a plurality of circuit blocks on a monolithic die, the method comprising:
generating a supply voltage via a high-voltage source coupled to the monolithic die;
dividing the supply voltage equally across the plurality of circuit blocks; and
detecting a variation in current used by at least one of the plurality of circuit blocks.

15. The method of claim 14, further comprising:
adjusting voltage across the at least one of the plurality of circuit blocks to maintain equal distribution of the supply voltage across the plurality of circuit blocks.
